Europäisches Patentamt

(19) European Patent Office

Office européen des brevets

(11) EP 0 895 971 A1

(12) EUROPEAN PATENT APPLICATION

(43) Date of publication:
10.02.1999 Bulletin 1999/06

(51) Int. Cl.6: C04B 28/08

(21) Application number: 97890158.5

(22) Date of filing: 08.08.1997

(84) Designated Contracting States:
AT BE CH DE DK ES FI FR GB GR IE IT LI LU MC NL PT SE
Designated Extension States:
AL LT LV RO SI

(71) Applicant:
"HOLDERBANK" Financière Glarus AG
8750 Glarus (CH)

(72) Inventors:
• Krivenko, Pavel Vasiljevich
c/o KSTUCA
25203 Kiev (UA)

• Lerat, André Marcel Jean
c/o Ciments d'Obourg S.A.
7034 Obourg (BE)
• Montani, Serge
c/o"Holderbank" M. & B. AG
5113 Holderbank (CH)
• Gebauer, Juraj
c/o "Holderbank" M. & B. AG
5113 Holderbank (CH)

(74) Representative:
Haffner, Thomas M., Dr.
Patentanwalt,
Haffner, Thomas M., Dr.,
Schottengasse 3a
1014 Wien (AT)

(54) **Alkaline sulfoaluminosilicate hydraulic cement and process for its manufacture**

(57) An alkaline sulfoaluminosilicate hydraulic cement contains water, calcium magnesium aluminosilicate glass, portland cement clinker, sinter made from sodium zeolite and an $SO_4^{2-}$-containing component, metakaolin and alkali metal compounds. Used as zeolites may be either synthetic zeolite and zeolite-containing rock in which the main rock-forming minerals are clinoptilolite, mordenite, gmelinite and analcime at their total content in the rock not less than 40 % by weight. Used as a $SO_4^{2-}$-containing component is a technical product, $Na_2SO_4$ or natural raw materials, by-products or aluminopotassium alums. The sinter is obtained by thermal activation in the temperature range 500° to 800°C of sodium zeolite and $SO_4^{2-}$-containing component taken in a ratio ranging between 1:1 to 4:1. The metakaolin is obtained by sintering a kaolinite clay in the temperature range 700-800° C until its full dehydration. The alkali metal compound are compounds that create an alkaline reaction in an aqueous medium. A bonding matrix obtained from the alkaline sulfoaluminosilicate hydraulic cement upon mixing with water is characteristic of the presence of alkaline sulfoaluminate and sulfoaluminosilicate phases. The cement is produced by mixing in a certain sequence all the constituents and sets in both normal conditions and under heat curing. The cement can be used as a neat cement or with fillers, such as sand, crushed stone and gravel, to make mortars and concrete, that are characteristic of high sulfate resistance, stable strength characteristics under alternate wetting-drying as well as low shrinkage along with high compressive strength and rapid strength gain.

EP 0 895 971 A1

**Description**

FIELD OF THE INVENTION

The invention relates to an alkaline sulfoaluminosilicate cement mixed with water to form neat cement, or with water and aggregates to make mortar and concrete, to be used in today's special construction industry where increased resistance to sulfate environments is required as well as for making shrinkage-free and expanding compositions, and the process of its manufacture.

BACKGROUND ART

Sulfate-resistant hydraulic cements which are blends of portland cement clinker and granulated blast furnace slag have long been known. Such cements are disclosed in many publications, e.g., J.Bijin, Blastfurnace Slag Cement, Netherlands, Stichting Beton Prisma, 1996, pp.33-35. A drawback of these cements is their low strength as compared to portland cement, especially at early stages. Furthermore, these cements exhibit shrinkage deformations that are comparable to those of portland cement, i.e., are considerable.

Prior art describes sulfoaluminate and sulfoaluminosilicate cements (T.V. Kuznetsova, Aluminate and Sulfoaluminate Cements, Moscow, Stroiizdat Publish., 1986) exhibiting a rapid strength gain and regulated deformation "shrinkage-expansion". These cement formulations have been utilized in the construction industry as quick-hardening and self-stressing cements, but they present difficulties as a result of the instability of the phases of the cement stone formed because of their being unstable in time, especially when exposed to aggressive environments.

Prior art also describes alkaline cements that appear to have some advantages over the previously described cements (U.S. Patents Nos. 5,372,640 issued on Dec. 13, 1994 and 5, 490,889 issued on Feb. 13, 1961). According to the first patent, the bonding matrix obtained from the developed cement by treatment with water at a ratio of 3:1 to 6:1 essentially consists of the formula: $(Li, Na)0-7 K_{1-6} Mg_{1-0} Ca_{3-0}[Al_4Si_{6-14}O_{21-36}]$ (0-15 $H_2$0), corresponding to calcium hydrosilicates and alkaline and alkaline- alkali-earth hydroaluminosilicate, which are known to crystallize slowly from the gel phase, resulting in an insufficient sulfate- resistance, an increased shrinkage and a flexural strength decline under alternate wetting-drying curing conditions (A. Kutti, R. Malinowski. Influence of the Curing Conditions on the Flexural Strength of Alkali Activated Blastfurnace Slag Mortar, Gotebourg, Chalmers University Publication, 1982, No. 1O, pp.9-18).

Known in the art is the slag alkaline cement described by Glukhovsky et al. in U.S. Patent No. 4,410,365 issued on Oct. 18, 1983, which consists of blast furnace or electrothermal phosphorous granulated slag, sodium sulfate in a quantity not more than 1 % by weight and water glass $Na_2O$ n $SiO_2$ m $H_2O$. The main new formations of the cement stone are calcium hydrosilicate and gels of alkaline hydlroaluminosilicate compositions that are typical of ordinary slag alkaline cements. Since sodium sulfate is introduced in an insufficient amount, it appears to be unfeasible to provide the formation of sulfoaluminosilicate phases responsible for imparting the target physical-mechanical and deformative properties and corrosion resistance of the cement stone formed. The sodium sulfate starts hardening processes and does not participate in the formation of the phase composition of the cement stone. The obtained cement stone shows considerable shrinkage exceeding the allowable limit values. Furthermore, the developed cement has rapid initial setting times (5 to 12 min) and is difficult to handle in practical applications because of the time being too short.

Ukraine Patent N 5818 issued on June 6, 1995, describes a cement binder containing, in % by weight, 63-82 granulated slag, 3-12 soda-sulfate blend with proportions of $Na_2SO_4$ to $Na_2CO_3$ = (30:99.5):(70:0.5) and 15-25 zeolitic rock of the composition: $(K_2, Na,Ca)0 Al_2O_3$ (4-10) $SiO_2$ $2H_2O$, which is produced by mixing previously ground dry components followed by the addition of water. The processes of hydration and hardening taking place are a result of sulfate activation of the granulated slag. The zeolitic rock acts as a pozzolanic additive which does not interact with sodium sulfate. The main hydration products of this cement are calcium hydrosilicate and sodium-calcium hydroaluminosilicates introduced with the composition of zeolitic rock and $Na_2SO_4$ $10H_2O$. Although this cement provided an increased tensile strength and a high resistance to crack formation, shrinkage and low sulfate resistance resulted from the high content of calcium hydrosilicates and strength, especially flexural strength, declined in alternate wetting-drying conditions as a consequence of the presence of water-soluble phases $Na_2SO_4$ 10 $H_2O$. Furthermore, this cement hardens slowly under normal conditions and normally requires steam curing.

The prior art failed to eliminate the above drawbacks.

Although the developed cement and cement stone brought about some advantages over the conventional blended and alkaline blended cements, such as a high strength and frost resistance, properties such as shrinkags, low sulfate resistance and variations in flexural strength under alternate wetting-drying conditions have continued to present difficulties for the user where special properties are needed.

## DISCLOSURE OF THE INVENTION

The sulfoaluminosilicate cement according to the invention is distinguished from bonding agents existing in current special cement technology by its composition as well as by the characteristics of the bonding matrix, the concrete so produced and the process of producing this cement.

With sulfoalumosilicate hydraulic cement for both general and special applications, the sulfoaluminosilicate cement according to the invention is characterized by 35 to 87.5 percent calcium-magnesium aluminosilicate glass, 1 to 10 percent ordinary portland cement clinker, 1O to 35 percent zeolitic sulfate sinter, O to 10 percent metakaolin and 1.5 - 10 percent by weight alkali metal compounds.

The established preliminary optimal proportions of the above components allow to achieve the goals of the invention by mixing preliminary treated and ground components with water in a W/C ratio varying between 0.25 and 0.6.

According to a preferred embodiment of the invention, any calcium-magnesium aluminosilicate glasses in which the ratio of $CaO+MgCO/Al_2O_3 + SiO_2$ is within 0.7 - 1.2 (preferably, 0.75-1.15) and, preferably, blast furnace and electrothermal phosphorous slags as well as some steel-making slags in which the content of glassy phase is more than 70 % by weight are used.

The role of ordinary portland cement clinker is to regulate the rate of hardening processes, especially at early stages. Quickly hydrating in an alkaline medium, it starts crystallization processes in a hardened cement stone.

The sinter may be composed of interground and intermixed zeolite and sulfate-containing components at a ratio of 1:1 to 4:1. The firing temperature preferably is selected within the range of 500 to 800°C. Used as zeolite may be natural and synthetic high-silica sodium zeolites in which Ha: Al $\geq$1 and Si:Al $\geq$2. Examples are clinoptilolite $Na_6(Al_6Si_{30}.O_{72}).24H_2O$, mordenite $Na_8(Al_8Si_{40}.O_{96}).24H_2O$, analcime $Na(AlSi20_6)H_2O$, and gmelinite $Na_8(Al_8Si_{16}.O_{48}).22H_2O$, which typically show considerable sizes of cavities and channels comparable to those of $Na^+$, $K^+$, $CO_3^{2-}$, $SO_4^{2-}$-ions. As a rule, zeolites are not found in nature in pure form, but within rocks. The content of zeolites in the rock to meet the objectives of the invention preferably should be $\geq$ 40 % by weight. as sulfate-containing components $K_2SO_4.nH_2O$, $Na_2SO_4.nH_2O$, $KA1(SO_4)_2.l2H_2O$ or industrial wastes containing them may advantageously be used.

During the thermal treatment of a mixture of zeolite and $SO_4^{2-}$at a temperature within the temperature range corresponding to the dehydration temperature of zeolite (500-800°C), there occur, first of all, destabilization, then interaction with $SO_4^{2-}$-containing components by occluding the latter in the channel cavities of zeolites to form an active sinter the main phases of which are amorphosized sodium aluminosilicate, weakly crystallized nepheline $Na_2O.Al_2O_3.2SiO_2$,or leucite $K_2O.Al_2O_3.2SiO_2$ and nosean $3(Na_2O).Al_2O_3.2SiO_2)(12)Na_2SO_4$.

Metakaolin can be produced by sintering a kaolinite clay at 700-800°C that serves as an active amorphosized product to regulate a new formations phase composition. An alkaline component (E) is presented by alkali (Na, K, Li) compounds creating a strong alkaline reaction in an aqueous medium. Referred to them are: caustic alkalis MeOH, sulfides MeS, carbonates $Me_2CO_3$, fluorides MeF and silicates $Me_2O.nSiO_2$, where Me = Li, K, Na.

In contrast to traditional aikaline cements, the $SO_4^{2-}$-ion in the cement of the invention participates actively in the formation of hydrosulfoaluminosilicate phases of target composition bringing about the advantages of the cement according to the invention in view of the traditional ones, and the sinter being a thermally activated ion-exchange complex promotes this process. Thus, by the introduction of nosean into the cement, conditions within the sinter can be reached under which the nosean becomes a crystallochemical sublayer for increasing content and creatiing the stable existence of these phases in a cement stone structure, especially when cement stone is exposed to sulfate aggressive environments.

Besides, the presence of active aluminosilicate phases as well as an inner integrity and morphological similarity of the hydration products will always provide for the existence of limited raw of solid solutions of replacement

$$SiO_2(OH)_2^{2-} \rightarrow [SO_4]^{2-}$$

(Regord M., Horhain H., Mortureaux B, Revue de Matériaux de Construction, 1974, 68 pp. 59-79).

A final member of this raw may be Na-Ca hydrosulfoaluminate $0.5Na_2O \cdot 4CaO \cdot 0.9Al_2O_3 \cdot l.lSO_3 \cdot 16H_2O$ (Larionova Z.M. et al. Phase Composition, Microstructure and Strength of a Cement Stone and Concrete, Stroiizdat Publish., Moscow, 1977, pp.171-180), which is a reason of low shrinkage of the cement stone formed. The sinter due to its instability serves also as an auxiliary reserve of $Na^+$-cations which migrate from a micropore space of the thermoactivated zeolite into a liquid medium, which leads to an increase in the alkalinity of the latter due to an increase in the $Na^+$-ion concentration. This, in turn, results in an acceleration of the dispergation processes in the aluminosilicate glass and, thus, in the intensification of the processes of hydration and hardening.

Thus, if zeolite and, e.g., $Na_2SO_4$ while mixing with water did not change in practice, the pH of the medium, the preliminary thermally destabilized sinter when mixed with water causes the pH of the medium to reach 10.14-11.8. Thus, contrary to traditional approaches of producing effective alkaline cements, the cement of the invention enables to obtain a qualitatively new phase composition of the cement stone in which chemical binding of the $SO_4^{2-}$ occurs to form the bonds Al-S and Al-O-S, which are a reason of the advances of the cement according to the invention over traditional technical solutions.

## Example 1

A sinter was obtained in the following manner: 70 weight parts of clinoptilolite rock with 70 % clinoptilolite and an Si:Al = 5 and 30 weight parts of chemically pure $Na_2SO_4$ were mixed. Then the mixture having a moisture content of 10 % by weight was pressed (P = 20 MPa) to produce pellets that were sintered for a period of I hour at 800°C. After this, the pellets were allowed to cool and ground to produce a powder having a grain size < 10 $\mu$k. After mixing the powder with water at a water to solids ratio (W/S) = 2 and curing for 30 min, the pH of the solution was 11.8. The study of phase composition of the sinter by aid of X-ray analysis showed that as a result of the thermal treatment of the mixed components at the above temperature the peaks corresponding to zeolite and $Na_2SO_4$ were not found, but the peaks with d=0.262; 0.288; 0.372; 0.651; 0.228 nm appeared, which may be referred to nosean $3(Na_2O).Al_2O_3.2SiO_2)(I2)Na_2SO_4$, along with peaks with d=0.387, 0.321, 0.228; 0.191 nm, which may be referred to nepheline $a_2O.Al_2O_3.2SiO_2$.

The zeolitic rock of the following chemical composition was used:

| Oxide content, % by weight | | | | | | | | | |
|------|------|------|------|------|------|------|------|------|------|
| $SiO_2$ | $Al_2O_3$ | $Fe_2O_3$ | CaO | MgO | $SO_3$ | MnO | $TiO_2$ | $K_2O+Na_2O$ | LOI |
| 64,85 | 13,9 | 5,03 | 4,09 | 1,5 | 0,16 | 0,16 | 0,25 | 2,29 | 7,17 |

## Example 2

A sinter was obtained in the following manner: the previously ground $Na_2SO_4$ and a synthetic zeolite of the composition $Na_2O \cdot Al_2O \cdot 3.35SiO_2 \cdot 3.65H_2O$ at Si/Al = 3.35 were mixed in various proportions, then pressed to produce pellets, which were then pressed at 500°C for 20 min. After grinding to produce a powder having a particle diameter $\leq$ 10 $\mu$m, the powders were mixed with deionized water at W/S = 10. The photometric studies of water with a $Na^+$-concentration = 0 ml/l are given in the Table.

| Zeolite/Na2SO4 | pH of resultant sulution | $Na^+$-ions content in resultant solution, mg/l |
|------|------|------|
| 90:10 | 8,9 | 39800 |
| 80:20 | 10,14 | 42400 |
| 70:30 | 10,57 | 45080 |
| 60:40 | 11,5 | 65700 |
| 50:50 | 11,8 | 69300 |

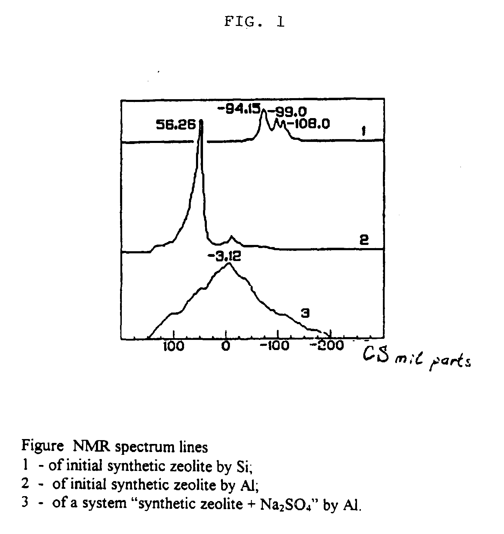

Investigations of the bond of the $Na_2SO_4$ molecules in the cavities of zeolite after treatment of the sinter with water was done by means of an NMR assay of Al and Si atoms (Gabuda S.P. et al. Nuclear Magnetic Resonance in Inorganic Chemistry, Nauka Publish., Moscow, 1988, 216 pp.) using the apparatus CXP-200 "Bruker" (Germany). A frequency of taking $Si^{28}$-spectrums was 39.76 MHz, $Al^{27}$- 52.114 MHz. The results are given in Figure 1. As is apparent from the Figure, an interaction of $Na_2SO_4$ with atoms of which an alurninosiliconoxygen framework consists occurs.

Investigations of the state of the $Al^{27}$-atom showed that it exists in the initial mineral within aluminosiliconoxygen tetrahedrons $(AlO_4)^{5-}$ and a field of chemical shifts (CS) is within the CS ranges $-56.26 \cdot 10^{-6}$ parts. In the hydrated sinter the aluminium, as it is clearly seen from Figure 1, is found in octahedral coordination, what is testified by the ocrrence of the peak with CS of $-3.12$ $10^{-6}$. This may be attributed to the formation of the bonds Al-S, Al-O-S, which was confirmed by a chemical interaction between $Na_2SO_4$ and zeolite.

The zeolite of following chemical composition was used:

| Oxide content, % by weight | | | | |
|---|---|---|---|---|
| $SiO_2$ | $Al_2O_3$ | $Fe_2O_3$ | $Na_2O$ | LOI |
| 46,48 | 23,88 | 0,12 | 14,52 | 14,32 |

Example 3

| | |
|---|---|
| Blast furnace granulated slag | – 35 parts by weight |
| Ordinary portland cement clinke | – 10 parts by weight |
| Sinter of Example 1 | – 35 parts by weight |
| Metakaolin | – 10 parts by weight |
| $Na_2O \cdot SiO_2$ | – 10 parts by weight |

were mixed with 60 weight parts of water in a "Hobart" mixer until the mixture appeared to be homogeneously distributed.

Then, the resultant mixture was placed in 2 cm cube molds and allowed to hydrate at $20\pm20°C$ and R.H.=$98\pm1$ %.

An investigation of the phase composition of new formations of the cement stone using XRD showed that after 28 days of hardening, peaks appeared in the spectrograms with d=0.182; 0.280; 0.303 nm corresponding to a tobermorite group, peaks with d=0.179; 0.228; 0.262; 0.287; 0.371; 0.45 nm corresponding to nosean and peaks with d=0.250; 0.280; 0.350; 0.46; 0.52 nm correponding to sodium-calcium hydrosulfoaluminate of the composition $0.5Na_2O$ $4CaO$ $0.9Al_2O_3$ $I.ISO_3 \cdot 16H_2O$. With an increase in the hardening time of up to 90 days, additional peaks occur with d=0.298; 0.343; 0.561 nm, which may be referred to analcime $Na(AlSi2O_6)H_2O$.

The following components were used:

| | Oxide content, % by weight | | | | | | | | | $CaO+MgO/Al_2O_3+SiO_2$ |
|---|---|---|---|---|---|---|---|---|---|---|
| | $SiO_2$ | $Al_2O_3$ | $Fe_2O_3$ | CaO | MgO | $SO_3$ | MnO | TiO2 | LOI | |
| Blastfurnace granulated slag | 32 | 15,4 | 1,1 | 31 | 10,1 | 0,6 | 1,0 | 7,7 | 1 | 0,86 |
| Ordinary portland cement clinker | 22 | 6,25 | 3,0 | 65,5 | 1,65 | 0,5 | - | - | 1 | 0 |
| Metakaolin | 68 | 31,2 | 0,2 | - | - | - | - | - | 0,6 | |

Example 4

```
    Blast furnace granulated slag          - 79.6 parts by weight
    Ordinary portland cement clinker       - 1.4 parts by weight
    Sinter of Example 1                    - 10 parts by weight
    Sodium metasilicate Na2O SiO2          - 10 parts by weight
```

were mixed with 36 weight parts of water and 300 weight parts of ISO standard sand, the blast furnace granulated slag and clinker being interground to a particle size of d<45 μm. The resultant mortar was placed into beam molds and allowed to hydrate in accordance with the European standards for cement. After 2 days of hardening the compressive strength was 35 MPa and the flexural strength 6.1 MPa, after 7 days 45.1 MPa and 6.9 MPa, respectively, and after 28 days 110 MPa and 12.8 MPa, respectively. The coefficient of corrosion resistance in a 3 % solution of $MgSO_4$ determined on cement:sand (1:3.5) samples with dimensions lxlx3 cm as a ratio between flexural strength of the samples stored after 14 days of normal hardening in an aggressive environment to that of the samples stored after 14 days of normal hardening in water was after 3 months 0.98, after 6 months 1.02, after 12 months 1; in 10 % solution of $K_2SO_4$ after 3 months 1.2, after 6 months 1.38, after 12 months 1.6. Shrinkage deformation after 28 days of hardening was 0.075 %, after 180 days was 0.09 %.
The following components were used:

| | Oxide content, % by weight | | | | | | | | CaO+ MgO/Al2O3+ SiO2 |
|---|---|---|---|---|---|---|---|---|---|
| | SiO2 | Al2O3 | Fe2O3 | CaO | MgO | SO3 | MnO | LOI | |
| Blastfurnace granulated slag | 38,4 | 15,2 | 0,7 | 36,2 | 7,96 | 2,09 | 0,65 | - | 0,86 |
| Ordinary portland cement clinker | 23,3 | 6,6 | 1,72 | 65,36 | 2,04 | 0,25 | - | | - |

Example 5

A calcium-magnesium glass was prepared by sintering a mixture of components at 1350°C with subsequent sharp cooling by pouring the same into running water. After cooling the granular glass is allowed to dry and ground to a particle size <43 μm. A zeolite rock previously ground to a particle size d <80 μm and having a content of 40 weight % clinoptilolite and 10 weight % analcime and potassium aluminate alums $KAl(SO_4)_2$ $12H_2O$ were intermixed at a ratio of 4:1 and sintered at 500°C for 1 hour. After this, the ready sinter was ground to a particle diameter of less than 10 μm and a mixture having the following composition was prepared:

| Calcium-magnesium aluminosilicate glass | - 54.7 parts by weight |
| Ordinary portland cement clinker of Example 4 | - 5 parts by weight |
| Sinter | - 30 parts by weight |
| Potassium metasilicate $K_2O$ $SiO_2$ | - 10.3 parts by weight, |

and mixed with 300 weight parts of water and ISO standard sand of Example 4 until the mixture appeared to be homogeneously distributed. The resultant mortar was placed into beam molds and allowed to hydrate in accordance with the European standards for cement. After 28 days of hardening, the compressive strength was 68 MPa and flexural strength 7.8 MPa. Then the samples were allowed to harden under cyclic alternating wetting and curing according to the following regime: 7 days in water + 7 days in air-dry conditions at $20\pm2°C$ and R.H. $60\pm1\%$. After the first cycle of curing the strength of the samples for compression was 70 MPa, for flexure 7.2 MPa, after the second cycle 72 MPa and 7.0 MPa, respectively, and after 150 cycles 94.2 MPa and 8.4 MPa, respectively. Shrinkage deformation after 28 days of hardening was 0.01 %, after 150 cycles of wetting-drying 0.0 %.

Zeolitic rock having the following chemical composition was used:

| Oxide content, % by weight | | | | | | | | | |
|------|-------|-------|-----|-----|-----|-----|------|----------|-----|
| $SiO_2$ | $Al_2O_3$ | $Fe_2O_3$ | CaO | MgO | $SO_3$ | MnO | $TiO_2$ | $K_2O+Na_2O$ | LOI |
| 58,24 | 21,08 | 4,5 | 3,3 | 1,22 | 0,16 | 0,14 | 0,53 | 8,34 | 2,65 |

The calcium-magnesium aluminosilicate glass of the following chemical composition was used:

| Oxide content, % by weight | | | | | | CaO+MgO/Al2O3+SiO2 |
|------|-------|-------|------|------|-----|-------------------|
| $SiO_2$ | $Al_2O_3$ | $Fe_2O_3$ | CaO | MgO | LOI | |
| 33,8 | 13,4 | 0,8 | 40,8 | 10,5 | 0,5 | 1,08 |

## Example 6

| | |
|---|---|
| Blast furnace granulated slag of Example 6 | - 62 parts by weight |
| Ordinary portland cement clinker of Example 4 | - 1 part by weight |
| Sinter of Example 5 | - 20 parts by weight |
| Metakaolin of Example 3 | - 10 parts by weight |
| Sodium metasilicate $Na_2O \cdot SiO_2$ | - 7 parts by weight, |

and mixed with 400 weight parts of water and 300 weight parts of ISO standard sand of Example 4 until the mixture appeared to be homogeneously distributed. After 2 days of hardening the compressive strength was 22.4 MPa and the flexural strength 5.6 MPa, after 28 days 78.7 MPa and 12.4 MPa, respectively.

Corrosion resistance in a 5 % solution of $MgSO_4$ was after 3 months 0.95; after 6 months 1.01, after 12 months 1.0.

The following components were used:

| | Oxide content, % by weight | | | | | | | | CaO+Mg/ Al2O3+SiO2 |
|---|---|---|---|---|---|---|---|---|---|
| | SiO2 | Al2O3 | Fe2O3 | CaO | MgO | SO3 | MnO | LOI | |
| Blastfurnace granulated slag | 36,69 | 7,65 | 2,6 | 45,85 | 2,94 | 2,06 | 1,63 | 1,34 | 1,13 |

## Example 7

As in Example 1, a sinter was obtained from a zeolitic rock of Example 1 and a soda-sulfate blend taken at a ratio of 1: 1. Using the sinter, the following mixture was prepared:

| | |
|---|---|
| Blast furnace granulated slag of Example 6 | - 43.5 parts by weight, |
| Ordinary portland cement clinker of Example 6 | - 10 parts by weight |
| Sinter | - 35 parts by weight |
| Metakaolin of Example 3 | - 10 parts by weight, |
| Sodium metasilicate $Na_2O \cdot SiO_2$ | - 1.5 parts by weight, |

and mixed with 45 weight parts of water and appropriate quantity of standard sand in a "Hobart" mixer until the mixture appeared to be homogeneously distributed. The resultant mortar was placed into beam molds and allowed to hydrate in accordance with the European standards for cement. After 28 days of hardening the expansion of the samples was 0.01 %, after 180 days 0.05 %.

The chemical composition of the soda-sulfate blend, which is a byproduct of aluminium production, was found as follows: $Na_2CO_3$ 24.63 % by weight, NaOH 3 % by weight, $Al_2O_3$ 1.81 % by weight; $Na_2SO_4$ 70.5 % by weight.

Example 8

Cement of the invention

of Example 4                                        – 1 part by weight

Standard sand                                       – 1.34 parts by weight

Coarse aggregate (granite)

of fraction 5- 10 mm                                – 1.28 parts by weight,

of fraction 10- 20 mm                               – 2.36 parts by weight,

were mixed with 2.7 weight parts of water until the mixture appeared to be homogeneously distributed. The concrete mix has a slump after 1 min of 7.4 cm, after 45 min of 4.5 cm. The hardened concrete cured at $20\pm2°C$ and R.H. and after 3 days showed a strength of compression and flexure of 46.4 MPa and 6.4 MPa, after 7 days 61.5 MPa and 7.9 MPa, after 28 days 82 MPa and 8.5 MPa, after 180 days 105 MPa and 10.2 MPa, after 720 days 118 MPa and 11.8 MPa, respectively. Shrinkage deformation after 28 days of hardening was $\varepsilon_{sh}$ $10^{-5}$ = 15.4 and after 180 days of hardening $\varepsilon_{sh}$ $10^{-5}$ = 16.6.

**Claims**

1. An alkaline sulfoaluminosilicate hydraulic cement, characterized in that it consists essentially of 35 to 87.5 per cent by weight calcium-magnesium aluminosilicate glass, 1 to 10 per cent by weight ordinary portland cement clinker, 10 to 35 per cent by weight zeolite- sulfate sinter, O to 10 per cent by weight metakaolin and 1.5 to 10 per cent by weight alkali metal compounds.

2. An alkaline sulfoaluminosilicate hydraulic cement according to claim 1, wherein the calcium-magnesium aluminosilicate glasses with the $CaO+MgCO/Al_2O_3 + SiO_2$ is 0.7- 1.2.

3. An alkaline sulfoaluminosilicate hydraulic cement according to claim 1 or 2, wherein the calcium-magnesium aluminosilicate glasses are presented by blast furnace, electrothermal phosphorous and steel- making slags with a glassy phase content of $\geq$ 70 % by weight.

4. An alkaline sulfoaluminosilicate hydraulic cement according to claim 1, 2 or 3, wherein the zeolite-sulfate sinter is obtained by sintering the mix of zeolite and $SO_4^{2-}$ taken in a ratio of 1:1 to 4:1 in a temperature range of 500 to 800°-C.

5. An alkaline sulfoaluminosilicate hydraulic cement according to any of claims 1 to 4, wherein the sodium high-silica zeolites with Na to Al $\geq$ 1 and Si to Al $\geq$ 2 are used for obtaining the above sinter.

6. An alkaline sulfoaluminosilicate hydraulic cement according to any of claims 1 to 5, wherein synthetic zeolites or zeolitic rocks with a zeolite content not less than 40 % by weight are used as sodium high-silica zeolites with Na to Al $\geq$ 1 and Si to Al $\geq$ 2 .

7. An alkaline sulfoaluminosilicate hydraulic cement according to any of claims 1 to 6, wherein technical products $Me_2SO_4.nH_2O$, where n=0-10, Me-K, Na, and $KAl(SO_4)_2.l2H_2O$ in which the $Me_2SO_4$ content is $\geq$ 70 % by weight are used as a $SO_4^{2-}$ containing component.

8. An alkaline sulfoaluminosilicate hydraulic cement according to any of claims 1 to 7, wherein used as alkali metal compounds are those of Na, K, and Na creating in an aqueous medium an alkaline reaction and selected frorn the group of hydroxides, carbonates, sulfides, fluorides and silicates.

9. A bonding matrix derived from the alkaline sulfoaluminosilicate hydraulic cement according to any of claims 1 to 8, in a reaction of alkaline sulfoaluminosilicate hydraulic cement with water in a ratio of from 1.6:1 to 4:1 to form chemical compounds with bonds -O-Al-O-Si-O and Si-O-Al-Si-O, determined with the use of NMR.

10. A concrete and mortar with a bonding matrix according to claim 9 and standard aggregates in the ratio 1:3 to 1:4.98 with a cement to water ratio of 4:1 to 1.67:1, hardened at 20±2°C and a relative humidity of ≥ 95 %, demonstrating

a compressive strength
after 2 days - 22.4 to 35 MPa,
after 7 days - 45.1 to 61.5 MPa
after 28 days - 68 - 110 MPa,
a flexural strength
after 2 days - 5.6 to 6.1 MPa
after 7 days - 6.9 to 7.9 MPa
after 28 days - 7.8 to 12.8 MPa
a shrinkage (-) - expansion (+) deformation
after 28 days- - 0 075 % - + 0,01 %
after 180 days - 0,09 % - + 0 05 %
a corrosion resistance in a 3 % solution of $Mg50_4$
after 3 months - 0.98;
after 6 months - 1.02,
after 12 months - 1
in a 10 %- solution of $K_2SO4$
after 3 months - 1.2;
after 6 months - 1.38;
after 12 months - 1.6;
a decline of flexural strength
after 2 cycles of alternate wetting-drying at 20±2°C and a relative humidity of 60±2 % not exceeding 10 % of the initial strength after 28 days hardening in standard conditions.

FIG. 1

Figure  NMR spectrum lines
1  - of initial synthetic zeolite by Si;
2  -  of initial synthetic zeolite by Al;
3  -  of a system "synthetic zeolite + $Na_2SO_4$" by Al.

European Patent Office

**EUROPEAN SEARCH REPORT**

Application Number

EP 97 89 0158

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | PATENT ABSTRACTS OF JAPAN vol. 016, no. 334 (C-0964), 21 July 1992 & JP 04 097934 A (NIPPON STEEL CORP), 30 March 1992, * abstract * & CHEMICAL ABSTRACTS, vol. 117, no. 6, 10 August 1992 Columbus, Ohio, US; abstract no. 54742w, XP000374825 * abstract * | 1,3,8 | C04B28/08 |
| Y | CHEMICAL ABSTRACTS, vol. 126, no. 23, 9 June 1997 Columbus, Ohio, US; abstract no. 308194, XP002051585 * abstract * & USHEROV-MARSHAK,V.A. ET AL: "Thermokinetic studies of early stages of hydration processes of slag-alkali cements" ZH.PRIKL.KHIM., vol. 69, no. 11, 1996, pages 1831-1834, | 1,3,8 | |
| A | CHEMICAL ABSTRACTS, vol. 118, no. 14, 5 April 1993 Columbus, Ohio, US; abstract no. 130629c, XP000401443 * abstract * & P.V.KRIVENKO ET AL: "Nature-protecting process for manufacture of new-generation alkali cements" STROIT. MATER. KONSTR., no. 2, 1992, pages 8-9, | 1,3 | |

TECHNICAL FIELDS SEARCHED (Int.Cl.6)

C04B

-/--

The present search report has been drawn up for all claims

| Place of search | Date of completion of the search | Examiner |
|---|---|---|
| THE HAGUE | 9 January 1998 | Theodoridou, E |

**European Patent Office**

## EUROPEAN SEARCH REPORT

**Application Number**

EP 97 89 0158

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | CHEMICAL ABSTRACTS, vol. 117, no. 4, 27 July 1992 Columbus, Ohio, US; abstract no. 32576t, XP000388666 * abstract * & KRIVENKO V.A. ET AL: "Slag-alkali binders and concrete for casing components of machine tools" TSEMENT, no. 11-12, 1991, pages 34-39, | 1 | |
| A | CHEMICAL ABSTRACTS, vol. 121, no. 22, 28 November 1994 Columbus, Ohio, US; abstract no. 261955, P.V.KRIVENKO ET AL: "Alkali pozzolan cements from zeolite-containing raw materials" XP002051586 * abstract * & TSEMENT, no. 4, 1993, pages 30 -31, | 1 | |
| A | EP 0 619 276 A (ENCI NEDERLAND BV) * claims * | 1 | |
| A | FR 2 669 918 A (J.DAVIDOVITS) | | |
| D,A | WO 92 04300 A (HOLDERBANK FINANCIERE GLARUS AG) * claims * | 1 | |
| | -/-- | | |

TECHNICAL FIELDS SEARCHED (Int.Cl.6)

The present search report has been drawn up for all claims

| Place of search | Date of completion of the search | Examiner |
|---|---|---|
| THE HAGUE | 9 January 1998 | Theodoridou, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 97 89 0158

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | DATABASE WPI<br>Section Ch, Week 9212<br>Derwent Publications Ltd., London, GB;<br>Class L02, AN 92-094741<br>XP002051587<br>& SU 1 655 935 A (KIEV ENG CONS INST)<br>* abstract * | 1 | |

TECHNICAL FIELDS
SEARCHED    (Int.Cl.6)

The present search report has been drawn up for all claims

| Place of search | Date of completion of the search | Examiner |
|---|---|---|
| THE HAGUE | 9 January 1998 | Theodoridou, E |

EPO FORM 1503 03.82 (P04C01)